# EUROPÄISCHE PATENTSCHRIFT

(11) **EP 1 712 528 B1**
(45) Veröffentlichungstag und Bekanntmachung des Hinweises auf die Patenterteilung: **02.11.2016**
(21) Anmeldenummer: 06112628.0
(22) Anmeldetag: 13.04.2006
(51) Int. Cl.: C03C 3/06, C03C 4/00, C03B 19/14, G02B 1/00

(54) **OPTISCHES BAUTEIL AUS QUARZGLAS, VERFAHREN ZUR HERSTELLUNG DE BAUTEILS UND VERWENDUNG DESSELBEN**
OPTICAL COMPONENT OF QUARTZ GLASS, METHOD FOR PRODUCING SAID COMPONENT AND USE THEREOF
COMPOSANT OPTIQUE EN VERRE QUARTZEUX , SON PROCEDE DE PRODUCTION ET SON UTILISATION

(30) Priorität: 15.04.2005 DE 102005017752
(43) Veröffentlichungstag der Anmeldung: 18.10.2006
(73) Patentinhaber: Heraeus Quarzglas GmbH & Co. KG, 63450 Hanau (DE)
(72) Erfinder: Kuehn, Bodo, D-63450 Hanau (DE); Ochs, Stefan, D-65520 Bad Camberg (DE); Kaiser, Steffen, D-63456 Hanau (DE); Kassube, Denis, D-63517 Rodenbach (DE)
(74) Vertreter: Staudt, Armin Walter

(56) Entgegenhaltungen:
- EP-A- 1 493 719
- EP-A- 1 586 544
- EP-A1- 0 546 196
- US-A1- 2003 195 107
- DATABASE WPI Week 200230 Derwent Publications Ltd., London, GB; AN 2002-245502 XP002434434 -& JP 2001 180962 A (ASAHI GLASS CO LTD) 3. Juli 2001 (2001-07-03)
- DATABASE WPI Week 199327 Derwent Publications Ltd., London, GB; AN 1993-216488 XP002434435 & JP 05 139779 A (ASAHI GLASS CO LTD) 8. Juni 1993 (1993-06-08)

## Beschreibung

Die Erfindung betrifft ein optisches Bauteil aus Quarzglas zur Verwendung in einem Projektionsobjektiv für die Immersions-Lithographie mit einer Arbeitswellenlänge unterhalb von 250 nm.

Weiterhin betrifft die Erfindung ein Verfahren zur Herstellung eines derartigen optischen Bauteils aus Quarzglas und eine Verwendung desselben.

Optische Bauteile aus Quarzglas werden für die Übertragung energiereicher, ultravioletter Laserstrahlung in mikrolithographischen Belichtungs- und Projektionssystemen zur Herstellung hochintegrierter Schaltungen auf Substraten eingesetzt. Moderne mikrolithographische Projektionssysteme arbeiten mit Excimerlasern, die energiereiche, gepulste UV-Strahlung einer Wellenlänge von 248 nm (KrF-Laser) oder von 193 nm (ArF-Laser) abgeben. Dabei besteht allgemein die Forderung, dass eine im Bereich einer Objektebene des Beleuchtungssystems bereitgestellte Lichtverteilung möglichst homogen und winkelerhaltend und mit größt möglicher Auflösung in eine zur Objektebene konjugierte Bildebene des Projektionsobjektivs auf dem zu belichtenden Substrat übertragen wird.

Jede im Lichtweg erzeugte Veränderung des Winkelspektrums führt zu einer Verzerrung der Intensitätsverteilung in der Objektivpupille, was zu einer unsymmetrischen Einstrahlung und damit zu einer Verschlechterung der Abbildungsleistung führt.

In dem Zusammenhang spielt die Doppelbrechung des Quarzglases eine wichtige Rolle, da diese die Abbildungstreue optischer Bauteile aus Quarzglas beeinträchtigt. Doppelbrechung entsteht beim inhomogenen Abkühlen des Rohlings für das herzustellende optische Bauteil oder sie wird durch die UV-Bestrahlung induziert, indem strukturelle Defekte entstehen, die zu einer Dichteänderung führen.

Eine durch UV-Strahlung induzierte, anisotrope Dichteänderung macht sich insbesondere bei Projektionssystemen bemerkbar, die nach der Technik der sogenannten "Immersions-Lithographie" arbeiten. Bei der Immersions-Lithographie ist der Spalt zwischen dem zu belichtenden Substrat in der Bildebene und dem letzten optischen Bauteil des Linsensystems mit einer Flüssigkeit mit höherer Brechzahl als Luft gefüllt. Die höhere Brechzahl der Flüssigkeit gegenüber Luft bewirkt eine größere numerische Apertur des Projektionsobjektivs insgesamt und verbessert dadurch die Auflösung des Systems.

Aus der DE 102 10 899 A1 ist ein refraktäres Projektionsobjektiv für den Einsatz der Mikrolithographie auf Basis der Immersions-Technik bekannt, das aus einer Vielzahl von Linsengruppen mit unterschiedlichen optischen Eigenschaften besteht. Für eine Arbeitswellenlänge von 193 nm wird als Linsenwerkstoff synthetisches Quarzglas vorgeschlagen und für eine Arbeitswellenlängen von 157 nm Kalziumfluorid. Der Spalt zwischen der letzten Linse des Systems und dem Substrat hat eine Weite von 8,4 mm und er ist durch eine Immersionsflüssigkeit in Form von deionisiertem Wasser gefüllt, dessen Brechungsindex mit 1,47 angegeben wird. Über das Quarzglas der letzten Linse des Projektionsobjektivs werden keine näheren Angaben gemacht. Allerdings ist die Immersions-Lithographie" polarisationsempfindlich; die besten Ergebnisse werden erhalten, wenn mit linear polarisierte Laserstrahlung gearbeitet wird, und nicht wie sonst üblich, mit vollständig oder teilweise zirkular polarisierter Laserstrahlung. Es hat sich gezeigt, dass linear polarisierte UV-Strahlung eine anisotrope Dichteänderung des Quarzglases verursacht, die zu einer induzierten Spannungsdoppelbrechung auch in Bereichen führt, die unter zirkular polarisierter Bestrahlung keine Änderung zeigen würden.

Maßnahmen zu Verminderung des Effektes der anisotropen Dichtänderung werden in der nicht veröffentlichten deutschen Patentanmeldung DE 10 2004 017 031 beschrieben, die für die vorliegende Patentanmeldung zum Stand der Technik gehört. Es hat sich jedoch gezeigt, dass ein in dieser Anmeldung nicht genannter Faktor Einfluss auf die anisotrope Dichtänderung hat.

Ein Quarzglasrohling für ein optisches Bauteil zur Verwendung in einem Projektionsobjektiv für die Mikrolithographie mit einer Arbeitswellenlänge um 193 nm wird auch in der DE 101 59 961 C2 beschrieben. Das bekannte Bauteil besteht aus Quarzglas, dessen Glasstruktur im wesentlichen frei von Sauerstoffdefektstellen ist, und das ein Wasserstoffgehalt im Bereich von 0,1 x 10¹⁶ Molekülen/cm³ bis 4,0 x 10¹⁶ Molekülen/cm³, einem Hydroxylgruppengehalt im Bereich von 125 Gew.-ppm bis 450 Gew.-ppm, einem Gehalt an SiH-Gruppen von weniger als 5 x 10¹⁶ Molekülen/cm³ aufweist.

Dieses Bauteil zeigt einen relativ hohen Hydroxylgruppengehalt und ist für einen Einsatz in einem Projektionsobjektiv für die Immersions-Lithographie mit einer Arbeits-Wellenlänge unterhalb von 250 nm nur eingeschränkt geeignet.

In EP 0 546 196 A1 wird ein Verfahren zur Herstellung eines optischen Bauteils für den Einsatz in der Mikrolithographie vorgeschlagen, das die folgenden Verfahrensschritte umfasst: Herstellen eines SiO₂-Sootkörpers, Trocknen des Sootkörpers bei einer Temperatur von 800 °C in einer Atmosphäre, die Chlor, Sauerstoff und Stickstoff enthält, Verglasen des getrockneten Sootkörpers bei einer Temperatur von 1600 °C unter Vakuum (1x10⁻² Torr), Homogenisieren des so erhaltenen Quarzglases durch Umformen in einer Schmelzform unter Stickstoff-Atmosphäre bei 1.700 °C und Abkühlen an Luft. Der so erhaltene Quarzglas-Rohling wird getempert, indem er 20 h bei einer Temperatur von 1.100 °C gehalten wird und anschließend mit einer Abkühlrate von 0,5 °C/h auf 600 °C abgekühlt wird. Das so erhaltene Bauteil für die Mikrolithographie besteht aus Quarzglas, das einen geringen Hydroxylgruppengehalt im Bereich von 10 Gew.-ppm bis 100 Gew.-ppm und einen geringen Wasserstoffgehalt von maximal 1 x 10¹⁶ Molekülen/cm³ aufweist.

Aus der EP 1 493 719 A1 ist ein Bauteil aus synthetischem Quarzglas für den Einsatz mit einer Wellenlänge im Bereich von 150 bis 200 nm bekannt, das einen Hydroxylgruppengehalt von weniger als 1 ppm und eine Konzentration an Sauerstoffüberschussdefekten von weniger als 1 x 10¹⁶ Defekte/cm³ aufweist. Das Quarzglas hat eine Wasserstoffmolekülkonzentration von weniger als 1 x 10¹⁷ Moleküle/cm³ und eine Defektkonzentration an Sauerstoffunterschussdefekten von 1 x 10¹⁴ Defekte/cm³ oder weniger.

Der Erfindung liegt die Aufgabe zugrunde, ein optisches Bauteil bereit zu stellen, das für den Einsatz mit linear polarisierter UV-Laserstrahlung besonders gut geeignet ist, und das hinsichtlich Kompaktierung und durch die anisotrope Dichteänderung induzierte Doppelbrechung optimiert ist. Außerdem liegt der Erfindung die Aufgabe zugrunde, ein Verfahren zur Herstellung eines derartigen optischen Bauteils anzugeben.

Hinsichtlich des optischen Bauteils wird diese Aufgabe erfindungsgemäß durch eine Ausführungsform des Bauteils gelöst, bei der das Quarzglas die Kombination folgender Eigenschaften aufweist:
- eine Glasstruktur im wesentlichen ohne Sauerstoffdefektstellen,
- einen mittleren Wasserstoffgehalt im Bereich zwischen 1 x 10¹⁶ und 1 x 10¹⁷ Molekülen/cm³,
- einen mittleren Gehalt an SiH-Gruppen von weniger als 5 x 10¹⁶ Molekülen/cm³,
- einen mittleren Gehalt an Hydroxylgruppen von weniger als 60 Gew.-ppm,
- einen mittleren Gehalt an Fluor von weniger als 10 Gew.-ppm,
- einen mittleren Gehalt an Chlor von weniger als 1 Gew.-ppm und
- eine fiktive Temperatur oberhalb von 1040 °C.

Im Idealfall sind die genannten Eigenschaften über das genutzte Volumen des optischen Bauteils konstant und die angegebenen Komponenten gleichmäßig verteilt. Die obigen Angaben beziehen sich jedoch auf Mittelwerte der Eigenschaften innerhalb des optisch genutzten Bereichs des Bauteils (auch bezeichnet als "CA-Bereich" (clear aperture) oder "optisch genutztes Volumen").

Unter einer Glasstruktur, die im wesentlichen frei von Sauerstoffdefektstellen ist, wird hier eine Glasstruktur verstanden, bei der die Konzentrationen von Sauerstoff-Unterschussdefekten und von Sauerstoff-Überschussdefekten unterhalb der Nachweisbarkeitsgrenze der Methode von Shelby liegen. Diese Nachweismethode ist veröffentlicht in "Reaction of hydrogen with hydroxyl-free vitreous silica" (J. Appl. Phys., Vol. 51, No. 5 (Mai 1980), S. 2589-2593). Quantitativ ergibt sich dabei eine Anzahl an Sauerstoff-Unterschussdefekten oder an Sauerstoff-Überschussdefekten in der Glasstruktur von nicht mehr als etwa 10¹⁷ pro Gramm Quarzglas.

Der Wasserstoffgehalt (H₂-Gehalt) wird anhand einer Raman-Messung ermittelt, die erstmals von Khotimchenko et al. vorgeschlagen worden ist ("Determining the Content of Hydrogen Dissolved in Quartz Glass Using the Methods of Raman Scattering and Mass Spectrometry" Zhurnal Prikladnoi Spektroskopii, Vol. 46, No. 6 (Juni 1987), S. 987-991).

Der Gehalt an SiH-Gruppen wird mittels Raman-Spektroskopie ermittelt, wobei eine Kalibrierung anhand einer chemischen Reaktion erfolgt: Si-O-Si + H₂ → Si-H + Si-OH, wie in Shelby "Reaction of hydrogen with hydroxyl-free vitreous silica" (J. Appl. Phys., Vol. 51, No. 5 (Mai 1980), S. 2589-2593) beschrieben.

Der Hydroxylgruppengehalt (OH-Gehalt) ergibt sich durch Messung der IR-Absorption nach der Methode von D. M. Dodd et al. ("Optical Determinations of OH in Fused Silica", (1966), S. 3911).

Bei der fiktiven Temperatur handelt es sich um einen Parameter, der die spezifische Netzwerkstruktur des Quarzglases charakterisiert. Ein gängiges Messverfahren zur Ermittlung der fiktiven Temperatur anhand einer Messung der Raman-Streuintensität bei einer Wellenzahl von etwa 606 cm⁻¹ ist in "Ch. Pfleiderer et. al; "The UV-induced 210 nm absorption band in fused Silica with different thermal history and stoichiometry"; J. Non-Cryst. Solids 159 (1993) 143-145" beschrieben.

Das aus der DE 10 2004 017 031 beschriebene Quarzglas wird erhalten, indem ein durch Flammenhydrolyse von SiCl₄ anhand des bekannten VAD-Verfahrens hergestellter SiO₂-Sootkörper bei einer Temperatur von 1200 °C in einer chlorhaltigen Atmosphäre dehydratisiert und anschließend bei einer Temperatur von ca. 1750 °C unter Vakuum (10⁻² mbar) zu einem transparenten Quarzglasrohling verglast wird.

Chlor kann Hydroxylgruppen im Quarzglasnetzwerk leicht substituieren, so dass deren Gehalt durch diese Art der Dehydratationsbehandlung relativ einfach auf sehr geringe Werte gesenkt werden kann. Allerdings kommt es dabei zu einem Einbau von Chlor in das Glasnetzwerk, was sich auf die UV-Strahlenbeständigkeit ungünstig auswirken kann. Ähnliches ergibt sich bei der Dehydratation mittels anderer Halogene oder deren Verbindungen. Andererseits erfordert eine rein physikalische - und nicht chemisch unterstützte - Absenkung des Hydroxylgruppengehalts auf Werte unterhalb von 60 Gew.-ppm lange Behandlungsdauern bei hohen Temperaturen. Es hat sich gezeigt, dass es dabei zu Umordnungen der Glasstruktur und zu Defektbildungen kommen kann, insbesondere zu Sauerstoffdefektstellen, wobei eine Ursache dafür darin liegen kann, dass für die entfernten OH-Gruppen ein geeigneter Substituent nicht unmittelbar zu Verfügung steht. Die so erzeugten Sauerstoffdefektstellen beeinträchtigen die UV-Strahlenbeständigkeit des Quarzglases ebenfalls. Es stellt sich somit das Problem, einen ausreichend getrockneten SiO₂-Sootkörper ohne wesentlichen Halogengehalt bereitzustellen, dessen Glasstruktur keine oder wenige Sauerstoffdefektstellen aufweist. Dafür geeignete Maßnahmen werden weiter unten anhand des erfindungsgemäßen Verfahrens näher erläutert.

Das Quarzglas des Bauteils gemäß der vorliegenden Erfindung unterscheidet sich daher von dem aus der DE 10 2004 017 031 bekannten Quarzglas dadurch, dass trotz geringem Hydroxylgruppengehalt von weniger als 60 Gew.-ppm seine Glasstruktur im wesentlichen frei von Sauerstoffdefektstellen und gleichzeitig der Halogengehalt gering ist. Insbesondere beträgt der Chlorgehalt des Quarzglases weniger als 1 Gew.-ppm.

Es hat sich gezeigt, dass ein optisches Bauteil, das aus einem Quarzglas mit den oben genannten Eigenschaften gefertigt wird, eine nur geringe anisotrope und isotrope Dichteänderung beim Einsatz mit linear polarisierter UV-Laserstrahlung erfährt.

Neben den oben erläuterten Maßnahmen wird diese Wirkung auf den vergleichsweise niedrigen Hydroxylgruppengehalt des Quarzglases und seine relativ hohe fiktive Temperatur zurückgeführt. Mit abnehmendem Hydroxylgruppengehalt eines Quarzglases nimmt dessen Viskosität zu. Zum anderen ist bekannt, dass aus dem Temperaturbereich zwischen 1000 °C und 1500 °C rasch abgekühltes Quarzglas (mit einer hohen fiktiven Temperatur) ein geringeres spezifisches Volumen und damit eine höhere spezifische Dichte aufweist, als langsam abgekühltes Quarzglas (mit einer niedrigen fiktiven Temperatur). Dieser Effekt beruht laut "R. Brückner, Silicon Dioxide; Encyclopedia of Applied Physics, Vol. 18 (1997), S. 101-131", auf einer Anomalie von synthetischem Quarzglas, bei dem der Verlauf des spezifischen Volumens im Bereich zwischen 1000 °C und 1500 °C einen negativen Temperaturkoeffizienten aufweist; das heißt, dass das spezifische Volumen von Quarzglas in diesem Temperaturbereich mit abnehmender Temperatur zunimmt, oder anders ausgedrückt, dass aus dem genannten Temperaturbereich schnell abgekühltes Quarzglas - mit einer hohen fiktiven Temperatur - eine höhere Dichte aufweist als langsam abgekühltes Quarzglas mit einer niedrigeren fiktiven Temperatur.

Die infolge der höheren fiktiven Temperatur gleichzeitig höhere Dichte des Quarzglases wirkt wie eine "vorweggenommene" Kompaktierung der Glasstruktur insgesamt. Insoweit wirkt die kompakte Netzwerkstruktur dem Effekt einer lokalen isotropen Dichteänderung bei UV-Bestrahlung entgegen.

Außerdem kann dem geringen OH-Gehalt neben der höheren Viskosität auch noch eine Bedeutung hinsichtlich der Vermeidung einer anisotropen Dichteänderung zukommen. Es ist zu vermuten, dass die Dichteänderung mit einer Umlagerung von Hydroxylgruppen einhergeht, wobei dieser Umlagerungsmechanismus um so wahrscheinlicher und leichter abläuft, je mehr Hydroxylgruppen zur Verfügung stehen. Der geringe Hydroxylgruppengehalt als auch die höhere Dichte (hohe fiktive Temperatur) des Quarzglases verringern daher die Empfindlichkeit der Glasstruktur gegenüber einer lokalen anisotropen Dichteänderung.

Das erfindungsgemäße Quarzglas-Bauteil widersteht UV-Strahlung somit besser als die bekannten Quarzglas-Qualitäten, so dass es insbesondere für den Einsatz zur Übertragung linear polarisierter UV-Strahlung einer Wellenlänge zwischen 190 nm und 250 nm besonders gut geeignet ist.

Es hat sich als besonders vorteilhaft erwiesen, wenn das Quarzglas eine fiktive Temperatur oberhalb von 1080 °C aufweist.

Je höher die fiktive Temperatur des Quarzglases ist, um so höher ist seine Dichte und um so ausgeprägter die oben beschriebene Wirkung der "vorweggenommenen" Kompaktierung des Quarzglases insgesamt, und damit der Widerstand gegen eine lokale anisotrope und isotrope Dichteerhöhung durch linear polarisierte UV-Strahlung. Bei sehr hohen fiktiven Temperaturen (>1200 °C) kann dieser positive Effekt jedoch durch eine zu hohe thermisch bedingte Spannungsdoppelbrechung beeinträchtigt werden.

Im Hinblick auf eine hohe Viskosität des Quarzglases wird eine Ausführungsform des optischen Bauteils bevorzugt, bei dem das Quarzglas einen Gehalt an Hydroxylgruppen zwischen 10 bis 30 Gew.-ppm.

Der geringe Hydroxylgruppengehalt bewirkt eine Erhöhung der Viskosität. Die damit einhergehende Verbesserung des Verhaltens gegenüber einer lokalen isotropen Dichteänderung ist insoweit überraschend, als in der oben erwähnten DE 101 59 961 C2 angenommen wird, dass ein Quarzglas mit einem Hydroxylgruppengehalt von weniger als 125 Gew.-ppm, wie sie für das nach dem Sootverfahren hergestellte Quarzglas typisch sind, zu Kompaktierung neigt.

Die viskositätserhöhende Wirkung des vergleichsweise geringen Hydroxylgruppengehalts kann durch einen hohen Fluorgehalt ganz oder teilweise aufgehoben werden. Auch kann davon ausgegangen werden, dass Si-F-Gruppen ähnlich wie Si-OH-Gruppen unter UV-Bestrahlung leicht umgelagert werden können und dadurch Dichteänderungen bewirken. Daher weist das Quarzglas für das erfindungsgemäße optische Bauteil bevorzugt einen Gehalt an Fluor von weniger als 5 Gew.-ppm auf.

Es hat sich außerdem als vorteilhaft erwiesen, wenn der mittlere Wasserstoffgehalt des Quarzglases weniger als 5 x 10¹⁶ Moleküle/cm³, vorzugsweise wischen 2 x 10¹⁶ und 5 x 10¹⁶ Molekülen/cm³ liegt.

Je höher der Wasserstoffgehalt ist, um so mehr wirkt sich seine defektausheilende Wirkung bei UV-Bestrahlung aus. Andererseits kann ein hoher Wasserstoffgehalt zu einer Bildung von SiH-Gruppen beitragen, so dass der mittlere Wasserstoffgehalt des Quarzglases bevorzugt weniger als 5 x 10¹⁶ Moleküle/cm³ beträgt. Diese Obergrenze ergibt sich somit daraus, dass bei hohem Wasserstoffgehalt die Gefahr einer SiH-Bildung über die Reaktion

H₂ + Si-O-Si → SiH + SiOH

zunimmt.

Hinsichtlich des Verfahrens wird die oben angegebene Aufgabe erfindungsgemäß durch ein Verfahren gelöst, das die folgenden Verfahrensschritte umfasst:
- Herstellen eines SiO₂-Sootkörpers,
- Trocknen des Sootkörpers bei einer Temperatur von mindestens 1150 °C unter Vakuum oder unter Inertgas und unter reduzierenden Bedingungen derart, das sich ein mittlerer Hydroxylgruppengehalt von weniger als 60 Gew.-ppm einstellt,
- Behandeln des getrockneten Sootkörpers mit einem Reagenz, das mit Sauerstoff-Fehlstellen der Quarzglasstruktur reagiert,
- Verglasen des Sootkörpers unter Bildung eines zylinderförmigen Quarzglasrohlings,
- Tempern des Quarzglasrohlings unter Bildung eines Quarzglas-Zylinders, mit einer fiktiven Temperatur oberhalb von 1040 °C, vorzugsweise oberhalb von 1080 °C der eine Kontur des herzustellenden optischen Bauteils mit Übermaß umgibt,
- Abnehmen eines Teils des axialen Übermaßes im Bereich der Stirnflächen des Quarzglas-Zylinders,
- Beladen des Quarzglas-Zylinders mit Wasserstoff durch Erhitzen in einer Wasserstoff enthaltenden Atmosphäre bei einer Temperatur unterhalb von 500 °C unter Erzeugung eines mittleren Wasserstoffgehalts im Bereich von 1 x 10¹⁶ Molekülen/cm³ bis 1 x 10¹⁷ Molekülen/cm.
- Durch "Direktverglasen" wird üblicherweise Quarzglas mit einem OH-Gehalt von 450 bis 1200 Gew.-ppm erhalten, wogegen für Quarzglas, das nach dem nach dem "Sootverfahren" hergestellt wird, eher geringe OH-Gehalte im Bereich einiger Gew.-ppm- bis 300 Gew.-ppm typisch sind. Das Quarzglas für das erfindungsgemäße optische Bauteil wird daher bevorzugt mittels "Sootverfahren" hergestellt. Dabei wird als Zwischenprodukt ein SiO₂-Sootkörper erzeugt, dessen Hydroxylgruppengehalt mittels einer Dehydratationsbehandlung auf einen vorgegebenen Wert eingestellt wird.

Die Dehydratationsbehandlung umfasst ein Trocknen des Sootkörpers bei einer Temperatur von mindestens 1150 °C unter Vakuum oder unter Inertgas und unter reduzierenden Bedingungen derart, das sich ein mittlerer Hydroxylgruppengehalt von weniger als 60 Gew.-ppm einstellt. Durch diese thermische Dehydratationsbehandlung wird ein übermäßiger Eintrag von Halogenen in den Sootkörper im Rahmen der Substitution von Hydroxylgruppen vermieden. Andererseits entstehen durch die langwierige thermische Behandlung unter reduzierenden Bedingungen Sauerstoff-Fehlstellen, da für die entfernten OH-Gruppen ein geeigneter Substituent nicht unmittelbar zur Verfügung steht. Die Sauerstoff-Fehlstellen beeinträchtigen die UV-Strahlenbeständigkeit des Quarzglases.

Aus diesem Grund ist erfindungsgemäß eine Nachbehandlung des Sootkörpers zur Reduzierung der Sauerstoff-Fehlstellen vorgesehen. Hierbei wird der getrocknete Sootkörper mit einem Reagenz behandelt, das mit den Sauerstoff-Fehlstellen der Quarzglasstruktur reagiert. Die Aktivierungsenergie für diese Reaktion wird bereitgestellt, indem der Sootkörper auf eine ausreichend hohe Temperatur aufgeheizt wird, die vom eingesetzten Reagenz abhängt.

Die Nachbehandlung kann vor dem Verglasen des Sootkörpers erfolgen oder gleichzeitig dazu. Nach dem Verglasen liegt ein Quarzglasrohling mit einem Hydroxylgruppengehalt von weniger als 60 Gew.-ppm vor, der im Wesentlichen frei von Sauerstoff-Fehlstellen, von SiH-Gruppen und von Wasserstoff ist (der Gehalt aller dieser Komponenten liegt unterhalb der Nachweisgrenze).

Der Quarzglasrohling wird anschließend getempert, wobei auf die Einstellung einer fiktiven Temperatur oberhalb von 1040 °C, vorzugsweise oberhalb von 1080 °C geachtet wird. Die vorgegebene fiktive Temperatur kann erhalten werden, indem der Quarzglasrohling bei einer Temperatur im Bereich der gewünschten fiktiven Temperatur bis zur Einstellung des strukturellen Gleichgewichtes gehalten und danach rasch abgekühlt wird, oder indem der Rohling von einer Temperatur oberhalb der einzustellenden fiktiven Temperatur ausreichend schnell abgekühlt wird. Dabei ist einerseits darauf zu achten, dass die gewünschte hohe fiktive Temperatur erhalten und andererseits keine Spannungsdoppelbrechung erzeugt wird. Der einen Voraussetzung (hohe fiktive Temperatur) wird durch die Untergrenze einer Abkühlrate und der anderen Voraussetzung (geringe Spannungsdoppelbrechung) durch eine entsprechende Untergrenze Rechnung getragen, die weiter unten näher erläutert wird.

Infolge der Einstellung einer vergleichsweise hohen fiktiven Temperatur weist der erhaltene Quarzglas-Zylinder Restspannungen auf, die sich vor allem im rascher abkühlenden Randbereich des Bauteils bemerkbar machen. Daher wird mindestens von beiden Stirnseiten des Zylinders ein Bereich abgetragen, der zu dem Übermaß gehört, das die Kontur des herzustellenden optischen Bauteils umgibt. Durch das vorherige Abtragen dieses Übermaßes (oder eines Teils davon) wird die Beladungsdauer beim anschließenden Beladen des Quarzglas-Zylinders mit Wasserstoff verkürzt, die zur Einstellung eines mittleren Wasserstoffgehalts im Bereich zwischen 1 x 10¹⁶ Molekülen/cm³ und 1 x 10¹⁷ Molekülen/cm³ erforderlich ist.

Es ist bekannt, dass Wasserstoff eine ausheilende Wirkung in Bezug auf Defekte aufweist, die durch UV-Bestrahlung in Quarzglas entstehen. Beim erfindungsgemäßen Verfahren wird der Wasserstoffgehalt jedoch stark reduziert, zum Beispiel infolge der oben erläuterten Vakuumbehandlung des Sootkörpers. Daher wird das Quarzglas nachträglich mit Wasserstoff beladen. Die Wasserstoffbeladung erfolgt bei niedriger Temperatur unterhalb von 500 °C, um die Ausbildung von SiH-Gruppen zu reduzieren. SiH-Gruppen in Quarzglas sind unerwünscht, da aus ihnen bei Bestrahlung mit energiereichem UV-Licht ein sogenanntes E'-Zentrum und atomarer Wasserstoff entstehen. Das E'-Zentrum bewirkt eine erhöhte Absorption bei einer Wellenlänge von 210 nm und macht sich auch im angrenzenden UV-Wellenlängenbereich ungünstig bemerkbar. Thermodynamisch bedingt entstehen bei höheren Temperaturen (500 °C - 800 °C) in Gegenwart von Wasserstoff verstärkt SiH-Gruppen, wobei auch der vergleichsweise geringe OH-Gehalt des Quarzglases das Gleichgewicht in Richtung einer SiH-Bildung verlagert.

Als Reagenz zum Absättigen der bei der thermischen Dehydratationsbehandlung erzeugten Sauerstoff-Fehlstellen werden bevorzugt Fluor und/oder Sauerstoff eingesetzt.

Die Nachbehandlung kann in einer anderen Heizeinrichtung erfolgen als die vorangegangene Dehydratationsbehandlung, so dass diese an die Gegenwart von Sauerstoff und/oder Fluor konstruktiv angepasst sein kann, zum Beispiel indem Grafitteile innerhalb des Heizraumes vermieden werden. Sauerstoff verhält sich in Bezug auf das Quarzglas vollkommen inert. Andererseits erfordert die Reaktion von Fluor mit vorhandenen Sauerstoff-Fehlstellen eine geringere Aktivierungsenergie und damit eine geringere thermische Belastung des Sootkörpers.

Da das Reagenz nicht zur Beseitigung von Hydroxylgruppen eingesetzt wird, sondern lediglich zur Absättigung der Sauerstoff-Fehlstellen, deren Anzahl vergleichsweise gering ist, kann auch die Reagenz-Menge gering gehalten werden. In dem Zusammenhang hat es sich als besonders vorteilhaft erwiesen, wenn die Reagenz-Menge, die dem Sootkörper während der Behandlung zugeführt wird, so eingestellt wird, dass sich ein Gehalt an Sauerstoff-Fehlstellen unterhalb von 2x10¹⁵ cm⁻³ ergibt.

Das Trocknen des Sootkörpers erfolgt vorzugsweise bei einer Temperatur von mindestens 1200 °C.

Durch eine hohe Temperatur wird die Behandlungsdauer verkürzt, die zur Beseitigung der Hydroxylgruppen bis auf einen Gehalt unterhalb von 60 Gew.-ppm erforderlich ist.

Es hat sich als besonders vorteilhaft erwiesen, wenn beim Trocknen ein mittlerer Hydroxylgruppengehalt im Bereich zwischen 10 und 30 Gew.-ppm eingestellt wird.

Je geringer der Hydroxylgruppengehalt des Sootkörpers nach dem Trocknen ist, um so geringer ist der Hydroxylgruppengehalt im daraus erhaltenen Quarzglas nach dem Verglasen, und um so geringer ist durch die anisotrope Dichteänderung induzierte Doppelbrechung, die das Quarzglas beim Einsatz mit linear polarisierter UV-Laserstrahlung erfährt. Die genannte Untergrenze resultiert daraus, dass die Dehydratationsbehandlung auf Grundlage rein physikalischer Methoden übermäßig hohe Temperaturen oder Behandlungsdauern erfordert, die sich auf die Qualität des Quarzglases ungünstig auswirken.

Das Tempern des Quarzglasrohlings dient in erster Linie zum Abbau von Spannungen, zur Einstellung der gewünschten fiktiven Temperatur, und damit einer kompaktierungsresistenten Glasstruktur, und umfasst bevorzugt folgende Verfahrensschritte:
- ein Halten des Quarzglasrohlings während einer ersten Haltezeit von mindestens 4 Stunden bei einer ersten, höheren Tempertemperatur, die mindestens 50 °C oberhalb der einzustellenden fiktiven Temperatur des Quarzglas-Bauteils liegt,
- ein Abkühlen mit einer ersten, geringeren Abkühlrate auf eine zweite, niedrigere Tempertemperatur, die im Bereich zwischen +/- 20 °C um die einzustellende fiktiven Temperatur des Quarzglas-Bauteils liegt,
- ein Halten bei der niedrigeren Tempertemperatur während einer zweiten Haltezeit, und
- ein Abkühlen auf eine vorgegebene Endtemperatur unterhalb von 800 °C, vorzugsweise unterhalb von 400 °C, mit einer zweiten, höheren Abkühlrate, die mindestens 25°C/h beträgt.

Es hat sich gezeigt, dass einhergehend mit einer hohen fiktiven Temperatur eine vergleichsweise dichte Netzwerkstruktur erzeugt wird, die einer weiteren - lokalen - Kompaktierung durch UV-Bestrahlung, und insbesondere auch einer anisotropen Dichteänderung durch linear polarisierte UV-Strahlung entgegenwirkt. Das oben genannte, bevorzugte Temperprogramm beinhaltet ein Erhitzen auf eine Temperatur deutlich oberhalb der fiktiven Temperatur (> 50 °C), ein Abkühlen auf eine Temperatur im Bereich um die einzustellende fiktive Temperatur, und daraufhin ein vergleichsweise rasches Abkühlen des Quarzglasrohlings auf eine niedrige Temperatur, unterhalb der keine wesentlichen Änderungen des Glasstruktur mehr zu erwarten sind.

Es handelt sich hierbei um ein vergleichsweise kurzes Temperverfahren, was zwar Nachteile hinsichtlich der Spannungsdoppelbrechung mit sich bringen könnte, jedoch eine größere Stabilität gegenüber einer lokalen Kompaktierung durch UV-Strahlung bewirkt und neben der Zeitersparnis den weiteren Vorteil hat, dass wegen der vergleichsweise kurzen Behandlungsdauer bei hoher Temperatur die Ausbildung von Inhomogenitäten infolge von Ausdiffusion von Komponenten und Kontaminationen durch eindiffundierende Verunreinigungen vermieden werden.

Ein besonders kompakte Netzwerkstruktur ergibt sich, wenn die erste Abkühlrate zwischen 1 °C/h und 10 °C/h, und vorzugsweise auf einen Wert im Bereich zwischen 3° bis 5°C/h, eingestellt wird.

Im Hinblick auf eine kompakte Glasstruktur hat es sich auch als günstig erwiesen, wenn die zweite Abkühlrate im Bereich zwischen 25° und 80° C/h, vorzugsweise oberhalb von 40 °C/h eingestellt wird.

Je schneller der Abkühlvorgang erfolgt, um so größer sind die oben erwähnten Vorteile hinsichtlich Zeitersparnis, Verminderung von Diffusionseffekten und die Wirkung der "vorab kompaktierten" Glasstruktur.

In einer bevorzugten Ausführungsform des erfindungsgemäßen Verfahrens beträgt die zweite Haltezeit zwischen 1 Stunde und 16 Stunden.

Dem Quarzglas wird hierbei noch einmal Gelegenheit zur Relaxation gegeben. Die Temperaturverteilung innerhalb des Quarzglasrohlings wird homogenisiert und thermische Gradienten, die zu Spannungsdoppelbrechung führen, werden verringert.

In dem Zusammenhang beträgt die erste Haltezeit vorzugsweise maximal 50 Stunden. Es hat sich gezeigt, dass eine längere Temperdauer zur Einstellung einer Glasstruktur, die nahe an der vorgegebenen fiktiven Temperatur liegt, nicht erforderlich ist Vorteilhafterweise erfolgt das Beladen des Quarzglasrohlings mit Wasserstoff bei einem Druck zwischen 0 und 1 bar.

Ein erhöhter Druck beschleunigt die Wasserstoffbeladung und kann sich auch auf die Dichte im Sinne einer kompakteren und gegen lokale anisotrope und isotrope Dichteänderung resistenteren Netzwerkstruktur auswirken.

Im Hinblick auf eine geringe Bildung von SiH-Gruppen wird eine Verfahrensweise bevorzugt, bei der das Beladen des Quarzglasrohlings mit Wasserstoff bei einer Temperatur unterhalb von 400°C, vorzugsweise unterhalb von 350 °C erfolgt.

Aus dem gleichen Grund wird vorzugsweise der mittlere Wasserstoffgehalt des Quarzglases auf weniger als 5 x 10¹⁶ Moleküle/cm³, vorzugsweise zwischen 2 x 10¹⁶ und 5 x 10¹⁶ Molekülen/cm³, eingestellt, da ein hoher Wasserstoffgehalt zu einer Bildung von SiH-Gruppen beitragen kann.

Das erfindungsgemäße optische Quarzglas-Bauteil bzw. das nach dem erfindungsgemäßen Verfahren hergestellte optische Bauteil zeichnet sich durch eine geringe Empfindlichkeit für eine lokale anisotrope und isotrope Dichteänderung bei Bestrahlung mit kurzwelliger UV-Strahlung aus. Es wird daher vorzugsweise als optisches Bauteil in einem Projektionssystem eines Belichtungsautomaten für die Immersions-Lithographie zum Zweck der Übertragung von ultravioletter, gepulster und linear polarisierter UV-Laserstrahlung einer Wellenlänge zwischen 190 nm und 250 nm eingesetzt.

Dabei hat es sich das Quarzglas-Bauteil als besonders stabil gegenüber UV-Laserstrahlung dieser Wellenlänge erwiesen, wenn diese eine Energiedichte von weniger als 600 µJ/cm², vorzugsweise weniger als 150 µJ/cm² und eine zeitliche Pulsbreite von 50 ns oder höher, vorzugsweise von 150 ns oder höher aufweist.

Nachfolgend wird die Erfindung anhand von Ausführungsbeispielen und einer Zeichnung näher erläutert. In der Zeichnung zeigen
- **Figur 1**: ein Diagramm zur Abhängigkeit der durch UV-Strahlung durch die anisotrope Dichteänderung induzierte Doppelbrechung vom Hydroxylgruppengehalt des Quarzglases,
- **Figur 2**: ein Diagramm zur Abhängigkeit der durch UV-Strahlung induzierten Brechzahländerung von der Pulszahl der Strahlung bei QuarzglasQualitäten, die sich in ihrem Hydroxylgruppengehalt unterscheiden, und
- **Figur 3**: ein Diagramm zur Abhängigkeit der durch UV-Strahlung induzierten Brechzahländerung vom Hydroxylgruppengehalt des Quarzglases.

### Probenherstellung, Probe S1

Es wird ein Sootkörper durch Flammenhydrolyse von SiCl₄ anhand des bekannten OVD-Verfahrens hergestellt. Der Sootkörper wird bei einer Temperatur von 1200 °C in einem Heizofen mit einem Heizelement aus Grafit unter Vakuum dehydratisiert. Das im Heizofen vorhandene Grafit bewirkt die Einstellung reduzierender Bedingungen. Bei Abschluss der Dehydratationsbehandlung nach 50 Stunden liegt der Hydroxylgruppengehalt des Sootkörpers bei etwa 48 Gew.-ppm. Das Quarzglas des Sootkörpers enthält Sauerstoff-Fehlstellen in einer Größenordnung von 1,7 x 10¹⁶ cm⁻³. Zur quantitativen Erfassung dieser geringen Konzentration ist die oben genannte Methode nach Shelby nicht mehr geeignet. Daher wurden die Sauerstoff-Fehlstellen indirekt durch den Transmissionsverlust ermittelt. Der Transmissionsverlust beruht dabei auf der Aufspaltung der Sauerstoff-Fehlstellen unter Laserbestrahlung in jeweils zwei sogenannte E'-Zentren, die eine charakteristische Absorption bei einer Wellenlänge von 210 nm zeigen.

Der getrocknete Sootkörper wird anschließend in einen Dotierofen eingebracht und darin bei einer Temperatur von 1100 °C während 20 Stunden in einer Atmosphäre aus 20% Sauerstoff, Rest Inertgas behandelt. Diese Behandlung ist so bemessen, dass die vorhandenen Sauerstoff-Fehlstellen bis unter die Nachweisbarkeitsgrenze abgesättigt und entfernt werden.

Danach wird der getrocknete und nachbehandelte Sootkörper in einem Sinterofen bei einer Temperatur von ca. 1750 °C unter Vakuum (10⁻² mbar) zu einem transparenten Quarzglasrohling verglast. Dieser wird anschließend durch thermisch mechanische Homogenisierung (Verdrillen) und Bildung eines Quarzglas-Zylinders homogenisiert. Der Hydroxylgruppengehalt des Quarzglas-Zylinder beträgt danach weiterhin ca. 48 Gew.-ppm.

Zum Abbau mechanischer Spannungen und zur Verminderung der Doppelbrechung sowie zur Erzeugung einer kompaktierungsresistenten Glasstruktur wird der Quarzglas-Zylinder einer Temperbehandlung unterzogen, die sich insbesondere durch ihre Kürze auszeichnet. Hierbei wird der Quarzglas-Zylinder während einer Haltezeit von 8 Stunden unter Luft und Atmosphärendruck auf 1130 °C erhitzt und anschließend mit einer Abkühlrate von 4 °C/h auf eine Temperatur von 1050 °C abgekühlt und bei dieser Temperatur 4 Stunden lang gehalten. Daraufhin wird der Quarzglas-Zylinder mit einer höheren Abkühlrate von 50 °C/h auf eine Temperatur von 300 °C abgekühlt, woraufhin der Ofen abgestellt und der Quarzglas-Zylinder der freien Abkühlung des Ofens überlassen wird.

Der so behandelte Quarzglaszylinder hat einen Außendurchmesser von 350 mm und eine Dicke von 60 mm. Das Quarzglas hat eine mittlere fiktive Temperatur von 1055°C. Es zeigt sich, dass der Zylinder vermutlich infolge des raschen Abkühlens von der Temperatur von 1050 °C besonders in seinen Randbereichen eine relativ starke Spannungsdoppelbrechung aufweist. Von den Stirnflächen des Quarzglaszylinders wird vor dem nächsten Behandlungsschritt ein Teil des Übermaßes gegenüber der Bauteil-Kontur abgenommen, nämlich eine Dicke von 3 mm.

Danach wird der Quarzglaszylinder in einer reinen Wasserstoffatmosphäre bei 380 °C zunächst bei einem Absolutdruck von 1 bar während einer Dauer von 314 Stunden und dann bei der Temperatur 393 Stunden bei einem Wasserstoffpartialdruck von 0 bar, und danach bei einem Absolutdruck von 0,1 bar während einer Dauer von 79 Stunden gehalten.

Der danach erhaltene Quarzglaszylinder ist im Wesentlichen frei von Chlor, Sauerstoffdefektstellen und SiH-Gruppen (unterhalb der Nachweisgrenze von 5 x1 0¹⁶ Molekülen/cm³), und er zeichnet sich innerhalb einem Durchmesser von 280 mm (CA-Bereich) durch einen mittleren Wasserstoffgehalt von 3 x 10¹⁶ Molekülen/cm³, einen Hydroxylgruppengehalt von 48 Gew.-ppm sowie eine mittlere fiktive Temperatur von 1055 °C aus. Der Fluor-Gehalt liegt unterhalb von 5 Gew.-ppm.

### Probenherstellung, Probe S2

Ein anderer Quarzglas-Zylinder wird wie oben anhand Probe S1 beschrieben hergestellt, jedoch mit folgenden Unterschieden:
- der Sootkörper wird bei einer Temperatur von 1200 °C in einem Heizofen mit einem Heizelement aus Grafit unter Vakuum dehydratisiert, wobei die Dehydratationsbehandlung erst nach 100 Stunden beendet ist. Der Hydroxylgruppengehalt des Sootkörpers liegt danach bei etwa 30 Gew.-ppm. Das Quarzglas des Sootkörpers enthält Sauerstoff-Fehlstellen in einer Größenordnung von 3 x 10¹⁶ Molekülen/cm³.
- Der getrocknete Sootkörper wird anschließend in einen Dotierofen eingebracht und darin bei einer Temperatur von 24 °C während 20 Stunden in einer Fluor-Atmosphäre behandelt. Diese Behandlung ist so bemessen, dass die vorhandenen Sauerstoff-Fehlstellen bis unter die Nachweisbarkeitsgrenze abgesättigt und entfernt werden.

Der Sootkörper wird danach verglast und weiterbehandelt, wie anhand von Probe S1 beschrieben. Der so erhaltene Quarzglaszylinder ist im Wesentlichen frei von Chlor, Sauerstoffdefektstellen und SiH-Gruppen (unterhalb der Nachweisgrenze von 5 x10¹⁶ Molekülen/cm³), und er zeichnet sich innerhalb einem Durchmesser von 280 mm (CA-Bereich) durch einen mittleren Wasserstoffgehalt von etwa 3 x 10¹⁶ Molekülen/cm³, einen Hydroxylgruppengehalt von 30 Gew.-ppm sowie eine mittlere fiktive Temperatur von 1075 °C aus. Der Fluor-Gehalt liegt trotz der Fluorbehandlung unterhalb von 5 Gew.-ppm.

Aus den so hergestellten Quarzglaszylindern werden die Messproben S1 und S2 für die Ermittlung der Resistenz des Quarzglases gegenüber Bestrahlung mit linear polarisierter UV-Excimerlaserstrahlung einer Wellenlänge von 193 nm gefertigt.

### Vergleichsproben S3, F1, F2, F3, SiH1 und SiH2

Den selben Messungen wurden auch die Vergleichsproben S3, F1, F2, F3, SiH1 und SiH2 unterzogen, deren charakteristische Merkmale im Folgenden erläutert werden.
- Die Probe S3 entspricht einem nach einem Standard-Sootverfahren hergestellten Quarzglas, das beispielsweise in der DE 101 59 962 näher beschrieben ist. Charakteristisch für diese Quarzglas-Qualität ist ein Hydroxylgruppengehalt von etwa 250 Gew.-ppm bis 350 Gew.-ppm.
- Bei den Quarzglas-Proben F1 bis F3 handelt es sich um handelsübliche Quarzglas-Qualitäten mit einem Fluorgehalt von mindestens 200 Gew.-ppm, wobei das Quarzglas jeweils bei niedriger Temperatur, wie oben beschreiben, mit Wasserstoff beladen worden ist.
- Die Vergleichsproben SiH1 und SiH2 entsprechen im Wesentlichen der Probe S3, jedoch mit einem anfänglich höheren Wasserstoffgehalt und einer nachträglichen Beladung mit Wasserstoff bei Temperaturen um 1000 °C, die zu einer erhöhten SiH-Bildung führte.

### Messergebnisse

In der früheren, oben erwähnten deutschen Patentanmeldung DE 10 2004 017 031 wird bereits beschrieben, dass sich bei unterschiedlichen Quarzglas-Qualitäten eine ungefähr lineare Zunahme der durch die anisotrope Dichteänderung induzierte Doppelbrechung [nm/cm] mit der Dosis der eingestrahlten UV-Strahlung zeigt, wobei die Dosis anhand des Produktes aus der Energiedichte der UV-Strahlung in µJ/cm² und der Pulszahl charakterisiert wird. Die Steigung der produktspezifischen Geraden ist ein Maß für die Empfindlichkeit des betreffenden Quarzglases gegenüber linear polarisierter UV-Strahlung in Bezug auf anisotrope Veränderungen seiner Dichte.

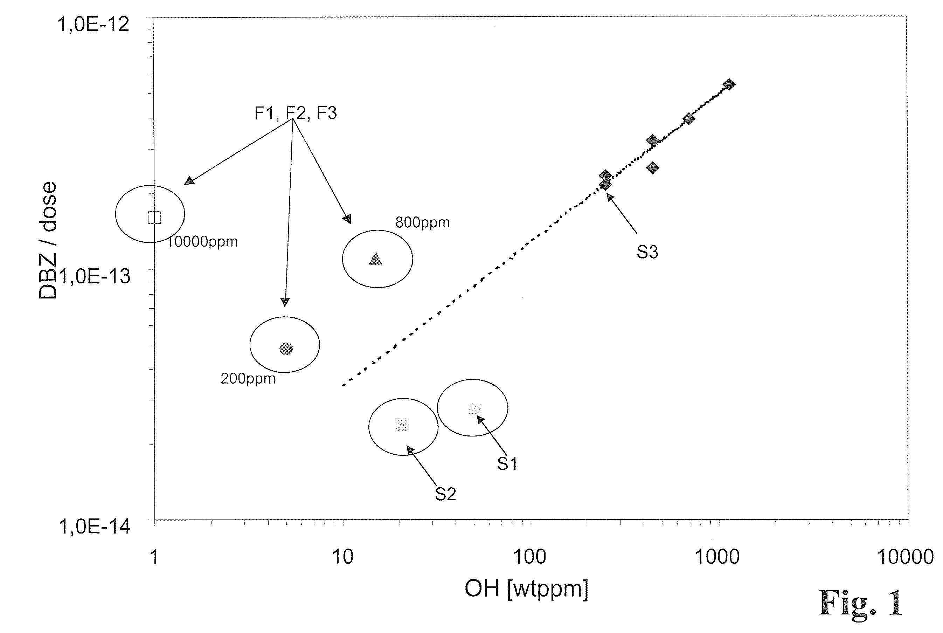

Entsprechende Versuche wurden für Vielzahl von Quarzglasproben durchgeführt, die sich außer in ihrem Hydroxylgruppengehalt, darunter die Probe S3 mit einem Hydroxylgruppengehalt von 300 Gew.-ppm, auch im Fluorgehalt unterscheiden. Die Versuchsergebnisse sind im Diagramm von **Figur 1** zusammengefasst. Auf der γ-Achse ist die Steigung (Empfindlichkeit) der oben erläuterten produktspezifischen Geraden aufgetragen, und auf der x-Achse der jeweilige OH-Gehalt der Proben in Gew.-ppm.

Es ist deutlich zu erkennen, dass die Steigung "DBZ/dose" (Empfindlichkeit) stark mit dem OH-Gehalt der Proben skaliert. Das bedeutet, dass mit zunehmendem OH-Gehalt die Empfindlichkeit der Quarzglasproben in Bezug auf eine anisotrope Dichteänderung bei Bestrahlung mit linear polarisierter Laserlicht-Strahlung einer Wellenlänge von 193 nm zunimmt. Die mit F1 (Fluorgehalt > 10000 Gew.-ppm), F2 (Fluorgehalt = 200 Gew.-ppm) und F3 (Fluorgehalt = 800 Gew.-ppm) bezeichneten Proben, die sich jeweils durch einen vergleichsweise hohen Fluorgehalt auszeichnen, weichen von der (ohne diese Proben) berechneten Ausgleichskurve (punktierte Linie) nach oben ab, zeigen also eine höhere Empfindlichkeit gegenüber linear polarisierter UV-Strahlung, als allein aufgrund des Hydroxylgruppengehalts zu erwarten gewesen wäre.

Die entsprechende Strahlenresistenz der fluor- und chlorarmen Quarzglasproben S1 (mit einem OH-Gehalt von 48 Gew.-ppm) und S2 (mit einem OH-Gehalt von 30 Gew.-ppm) kann als sehr gut angesehen werden.

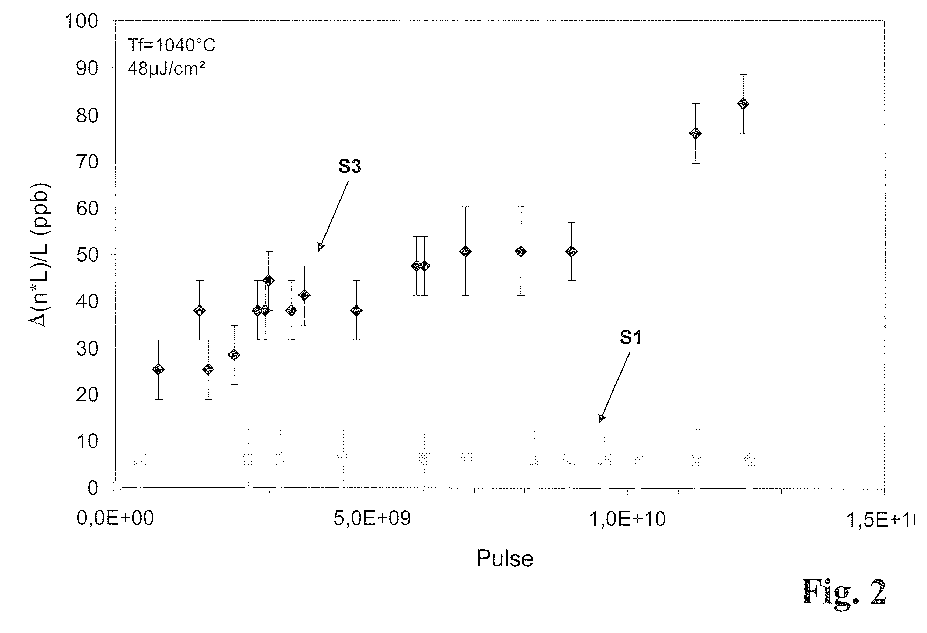

Das Diagramm von **Figur 2** zeigt die Wellenfrontverzerrung, angegeben als Änderung des Brechungsindex bezogen auf die Weglänge ΔnL/L in ppb, in Abhängigkeit von der Pulszahl bei Bestrahlung zweier unterschiedlicher Quarzglasproben (Probe S1 und einer Vergleichsprobe S3 mit einem Hydroxylgruppengehalt von 300 Gew.-ppm mit jeweils der gleichen fiktiven Temperatur von 1040 °C). Diese Proben wurden linear polarisierter UV-Strahlung einer Wellenlänge von 193 nm, mit einer Pulsbreite von 25 ns und einer Energiedichte von 48 µJ/cm² ausgesetzt und die dabei erzeugte Wellenfrontverzerrung von Zeit zu Zeit gemessen.

Daraus ist erkennbar, dass die Wellenfrontverzerrung mit zunehmender Pulszahl bei der Probe S3 mit dem hohen Hydroxylgruppengehalt deutlich höher liegt als bei der Probe S1 mit dem geringeren Hydroxylgruppengehalt. Dies zeigt, dass der isotrope Anteil der Dichteänderung durch linear polarisierte Strahlung vom Hydroxylgruppengehalt des jeweiligen Quarzglases abhängt.

Die Abhängigkeit der Wellenfrontverzerrung von der Pulszahl - wie in Figur 2 dargestellt - kann für jede Quarzglas-Qualität mittels einer individuellen Maßzahl beschrieben werden, die die Kompaktierungsempfindlichkeit des Quarzglases gegenüber UV-Strahlung charakterisiert.

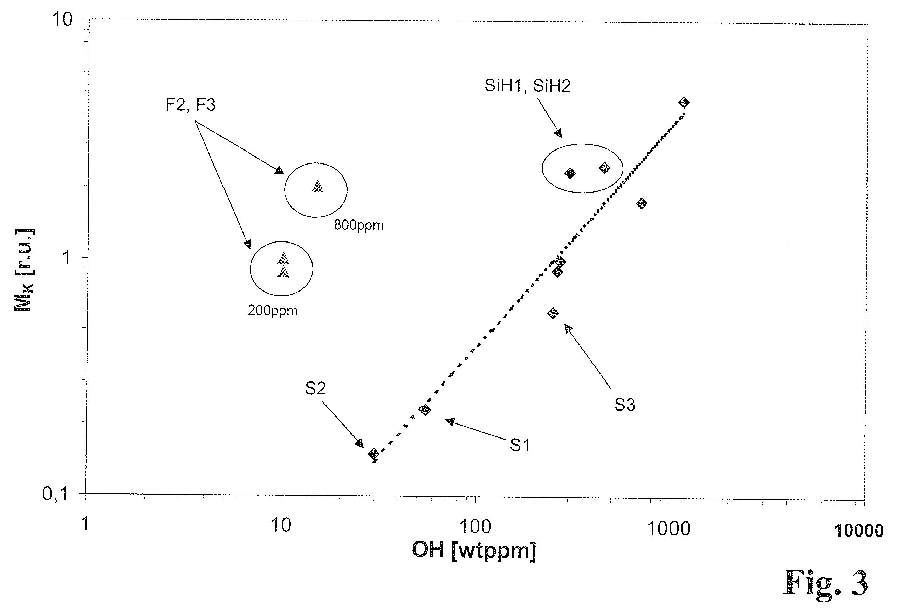

Eine derartige dimensionslose Maßzahl M_{K} ist auf der y-Achse des Diagramms von **Figur 3** gegen den Hydroxylgruppengehalt des Quarzglases in Gew.-ppm (x-Achse) aufgetragen. Es ergibt sich eine ungefähr lineare Abhängigkeit der Kompaktierungsempfindlichkeit (M_{K}) vom Hydroxylgruppengehalt. Die Ausreißer F1 und F2 bzw. SiH1 und SiH2 stehen für die oben erwähnten Quarzglasproben mit hohem Fluorgehalt bzw. für Quarzglasproben mit einem Si-H-Gehalt von 1,7.x 10¹⁷ Molekülen/cm³ (SiH1) bzw. von 2 x 10¹⁷ Molekülen/cm³ (SiH2). Diese Quarzglas-Qualitäten zeigen eine vergleichsweise hohe Kompaktierungsempfindlichkeit gegenüber den Quarzglasproben S1 und S2 gemäß der vorliegenden Erfindung.

Optische Bauteile, die aus einem Quarzglasqualität entsprechend den Proben S1 und S2 hergestellt sind, sind für den Einsatz in einem Projektionssystem eines Belichtungsautomaten für die Immersions-Lithographie zum Zweck der Übertragung von ultravioletter, gepulster und linear polarisierter UV-Laserstrahlung einer Wellenlänge zwischen 190 nm und 250 nm besonders geeignet.

Erste Versuche zur Überprüfung der Abhängigkeit der Strahlenschädigung von der Pulsweite des eingestrahlten Laserlichtes lassen vermuten, dass breitere Pulse mit einer Pulsweite von 50 ns (im Vergleich zu einer Pulsweite von 25 ns) den Einsatz des erfindungsgemäßen Quarzglas-Bauteils bei höheren Energiedichten oder Pulszahlen ermöglichen.

## Patentansprüche

1. Optisches Bauteil aus Quarzglas zur Verwendung in einem Projektionsobjektiv für die Immersions-Lithographie mit einer Arbeitswellenlänge unterhalb von 250 nm, **dadurch gekennzeichnet, dass** das Quarzglas die Kombination folgender Eigenschaften aufweist:
• eine Glasstruktur im wesentlichen ohne Sauerstoffdefektstellen,
• einen mittleren Wasserstoffgehalt im Bereich zwischen 1 x 10¹⁶ und 1 x 10¹⁷ Molekülen/cm³,
• einen mittleren Gehalt an SiH-Gruppen von weniger als 5 x 10¹⁶ Molekülen/cm³,
• einen mittleren Gehalt an Hydroxylgruppen von weniger als 60 Gew.-ppm,
• einen mittleren Gehalt an Fluor von weniger als 10 Gew.-ppm,
• einen mittleren Gehalt an Chlor von weniger als 1 Gew.-ppm und
• eine fiktive Temperatur oberhalb von 1040 °C.

2. Bauteil nach Anspruch 1, **dadurch gekennzeichnet, dass** das Quarzglas eine fiktive Temperatur oberhalb von 1080 °C aufweist.

3. Bauteil nach Anspruch 1 oder 2, **dadurch gekennzeichnet, dass** das Quarzglas einen Gehalt an Hydroxylgruppen zwischen 10 bis 30 Gew.-ppm aufweist.

4. Bauteil nach einem der vorhergehenden Ansprüche, **dadurch gekennzeichnet, dass** das Quarzglas einen Gehalt an Fluor von weniger als 5 Gew.-ppm aufweist.

5. Bauteil nach einem der vorhergehenden Ansprüche, **dadurch gekennzeichnet, dass** der mittlere Wasserstoffgehalt des Quarzglases weniger als 5 x 10¹⁶ Moleküle/cm³, vorzugsweise zwischen 2 x 10¹⁶ und 5 x 10¹⁶ Molekülen/cm³, beträgt.

6. Verfahren zur Herstellung eines derartigen optischen Bauteils aus Quarzglas zur Verwendung in einem Projektionsobjektiv für die Immersions-Lithographie mit einer Arbeitswellenlänge unterhalb von 250 nm, umfassend die folgenden Verfahrensschritte:
• Herstellen eines SiO₂-Sootkörpers,
• Trocknen des Sootkörpers bei einer Temperatur von mindestens 1150 °C unter Vakuum oder unter Inertgas und unter reduzierenden Bedingungen derart, das sich ein mittlerer Hydroxylgruppengehalt von weniger als 60 Gew.-ppm einstellt,
• Behandeln des getrockneten Sootkörpers mit einem Reagenz, das mit Sauerstoff-Fehlstellen der Quarzglasstruktur reagiert,
• Verglasen des Sootkörpers unter Bildung eines zylinderförmigen Quarzglasrohlings,
• Tempern des Quarzglasrohlings unter Bildung eines Quarzglas-Zylinders, mit einer fiktiven Temperatur oberhalb von 1040 °C, vorzugsweise oberhalb von 1080 °C der eine Kontur des herzustellenden optischen Bauteils mit Übermaß umgibt,
• Abnehmen eines Teils des axialen Übermaßes im Bereich der Stirnflächen des Quarzglas-Zylinders, und
• Beladen des Quarzglas-Zylinders mit Wasserstoff durch Erhitzen in einer Wasserstoff enthaltenden Atmosphäre bei einer Temperatur unterhalb von 500 °C unter Erzeugung eines mittleren Wasserstoffgehalts im Bereich von 1 x 10¹⁶ Molekülen/cm³ bis 1 x 10¹⁷ Molekülen/cm³.

7. Verfahren nach Anspruch 6, **dadurch gekennzeichnet, dass** als Reagenz zum Absättigen der bei der thermischen Dehydratationsbehandlung erzeugten Sauerstoff-Fehlstellen Fluor und/oder Sauerstoff eingesetzt wird.

8. Verfahren nach Anspruch 6 oder 7, **dadurch gekennzeichnet, dass** die Reagenz-Menge, die dem Sootkörper während der Behandlung zugeführt wird, so eingestellt wird, dass sich im Quarzglas-Rohling eine Konzentration an Sauerstoffdefektstellen von weniger als 2 x 10¹⁵/cm³ einstellt.

9. Verfahren nach einem der vorgehenden Verfahrensansprüche, **dadurch gekennzeichnet, dass** das Trocknen des Sootkörpers bei einer Temperatur von mindestens 1200 °C erfolgt.

10. Verfahren nach einem der vorgehenden Verfahrensansprüche, **dadurch gekennzeichnet, dass** beim Trocknen ein mittlerer Hydroxylgruppengehalt im Bereich zwischen 10 und 30 Gew.-ppm eingestellt wird.

11. Verfahren nach einem der vorgehenden Verfahrensansprüche, **dadurch gekennzeichnet, dass** das Tempern des Quarzglasrohlings folgende Verfahrensschritte umfasst:
• ein Halten des Quarzglasrohlings während einer ersten Haltezeit von mindestens 4 Stunden bei einer ersten, höheren Tempertemperatur, die mindestens 50 °C oberhalb der einzustellenden fiktiven Temperatur des Quarzglas-Bauteils liegt,
• ein Abkühlen mit einer ersten, geringeren Abkühlrate auf eine zweite, niedrigere Tempertemperatur, die im Bereich zwischen +/- 20 °C um die einzustellende fiktiven Temperatur des Quarzglas-Bauteils liegt,
• ein Halten bei der niedrigeren Tempertemperatur während einer zweiten Haltezeit, und
• ein Abkühlen auf eine vorgegebene Endtemperatur unterhalb von 800 °C, vorzugsweise unterhalb von 400 °C, mit einer zweiten, höheren Abkühlrate, die mindestens 25°C/h beträgt.

12. Verfahren nach Anspruch 11, **dadurch gekennzeichnet, dass** die erste Abkühlrate auf einen Wert zwischen 1 °C/h und 10 °C/h, und vorzugsweise auf einen Wert im Bereich zwischen 3° bis 5°C/h, eingestellt wird.

13. Verfahren nach Anspruch 11 oder 12, **dadurch gekennzeichnet, dass** die zweite Abkühlrate auf einen Wert im Bereich zwischen 25° und 80° C/h, vorzugsweise oberhalb von 40 °C/h, eingestellt wird.

14. Verfahren nach einem der Ansprüche 11 bis 13, **dadurch gekennzeichnet, dass** die zweite Haltezeit zwischen 1 Stunde und 16 Stunden beträgt.

15. Verfahren nach einem der Ansprüche 11 bis 14, **dadurch gekennzeichnet, dass** die erste Haltezeit maximal 50 Stunden beträgt.

16. Verfahren nach einem der vorgehenden Verfahrensansprüche, **dadurch gekennzeichnet, dass** das Beladen des Quarzglasrohlings mit Wasserstoff bei einem Druck zwischen 0 und 1 bar erfolgt.

17. Verfahren nach einem der vorgehenden Verfahrensansprüche, **dadurch gekennzeichnet, dass** das Beladen des Quarzglasrohlings mit Wasserstoff bei einer Temperatur unterhalb von 400°C, vorzugsweise unterhalb von 350 °C erfolgt.

18. Verfahren nach einem der vorgehenden Verfahrensansprüche, **dadurch gekennzeichnet, dass** der mittlere Wasserstoffgehalt des Quarzglases auf weniger als 5 x 10¹⁶ Moleküle/cm³, vorzugsweise zwischen 2 x 10¹⁶ und 5 x 10¹⁶ Molekülen/cm³, eingestellt wird.

19. Verwendung eines optischen Bauteils nach einem der Ansprüche 1 bis 5 oder eines nach dem Verfahren gemäß den Ansprüchen 6 bis 18 hergestellten optischen Bauteils aus Quarzglas in einem Projektionssystem eines Belichtungsautomaten für die Immersions-Lithographie zum Zweck der Übertragung von ultravioletter, gepulster und linear polarisierter UV-Laserstrahlung einer Wellenlänge zwischen 190 nm und 250 nm.

20. Verwendung nach Anspruch 19, **gekennzeichnet durch** einer Energiedichte der Laserstrahlung von weniger als 600 µJ/cm², vorzugsweise weniger als 150 µJ/cm².

21. Verwendung nach Anspruch 19 oder 20, **gekennzeichnet durch** einer zeitliche Pulsbreite der Laserstrahlung von 50 ns oder mehr, vorzugsweise von 150 ns oder mehr.

## Claims

1. An optical component of quartz glass for use in a projection lens system for immersion lithography with an operating wavelength below 250 nm, **characterized in that** the quartz glass component comprises the combination of the following properties:
• a glass structure essentially without oxygen defects,
• a mean hydrogen content in a range between 1 x 10¹⁶ and 1 x 10¹⁷ molecules/cm³,
• a mean content of SiH groups of less than 5 x 10¹⁶ molecules/cm³,
• a mean content of hydroxyl groups of less than 60 wt ppm,
• a mean content of fluorine of less than 10 wt ppm,
• a mean content of chlorine of less than 1 wt ppm, and
• a fictive temperature above 1040 °C.

2. The component according to claim 1, **characterized in that** the quartz glass has a fictive temperature above 1080°C.

3. The component according to claim 1 or 2, **characterized in that** the quartz glass has a content of hydroxyl groups between 10 and 30 wt ppm.

4. The component according to any one of the preceding claims, **characterized in that** the quartz glass has a content of fluorine of less than 5 wt ppm.

5. The component according to any one of the preceding claims, **characterized in that** the mean hydrogen content of the quartz glass is below 5 x 10¹⁶ molecules/cm³, preferably between 2 x 10¹⁶ and 5 x 10¹⁶ molecules/cm³.

6. A method for producing such an optical component of quartz glass for use in a projection lens system for immersion lithography with an operating wavelength below 250 nm, comprising the following method steps:
• producing an SiO₂ soot body,
• drying the soot body at a temperature of at least 1150°C under vacuum or in an inert gas atmosphere and under reducing conditions in such a manner that a mean hydroxyl group content of less than 60 wt ppm is obtained,
• treating the dried soot body with a reagent reacting with oxygen defects of the quartz glass structure,
• vitrifying the soot body so as to form a cylindrical quartz glass blank,
• annealing the quartz glass blank so as to form a quartz glass cylinder at a fictive temperature above 1040°C, preferably above 1080°C, which surrounds a contour of the optical component to be produced with an overdimension,
• removing part of the axial overdimension in the area of the faces of the quartz glass cylinder, and
• loading the quartz glass cylinder with hydrogen by heating in a hydrogencontaining atmosphere at a temperature below 500°C so as to produce a mean hydrogen content in the range of 1 x 10¹⁶ molecules/cm³ to 1 x 10¹⁷ molecules/cm³.

7. The method according to claim 6, **characterized in that** fluorine and/or oxygen is used as the reagent for saturating the oxygen defects produced during thermal dehydration treatment.

8. The method according to claim 6 or 7, **characterized in that** the amount of reagent supplied to the soot body during treatment is set such that a concentration of oxygen defects of less than 2 x 10¹⁵/cm³ is obtained in the quartz glass blank.

9. The method according to any one of the preceding method claims, **characterized in that** the soot body is dried at a temperature of at least 1200°C.

10. The method according to any one of the preceding method claims, **characterized in that** during drying a mean hydroxyl group content is set in the range between 10 and 30 wt ppm.

11. The method according to any one of the preceding method claims, **characterized in that** the annealing of the quartz glass blank comprises the following method steps:
• holding the quartz glass blank for a first holding period of at least 4 hours at a first higher annealing temperature which is at least 50°C above the fictive temperature of the quartz glass component to be set,
• cooling at a first lower cooling rate to a second lower annealing temperature which is in the range between +/- 20 °C around the fictive temperature of the quartz glass component to be set,
• holding at the lower annealing temperature for a second holding period, and
• cooling to a predetermined final temperature below 800°C, preferably below 400°C, at a second higher cooling rate which is at least 25°C/h.

12. The method according to claim 11, **characterized in that** the first cooling rate is set to a value between 1°C/h and 10°C/h, and preferably to a value in the range between 3°C/h and 5°C/h.

13. The method according to claim 11 or 12, **characterized in that** the second cooling rate is set to a value in the range between 25°C/h and 80°C/h, preferably above 40°C/h.

14. The method according to any one of claims 11 to 13, **characterized in that** the second holding period is between 1 hour and 16 hours.

15. The method according to any one of claims 11 to 14, **characterized in that** the first holding period lasts not more than 50 hours.

16. The method according to any one of the preceding method claims, **characterized in that** the quartz glass blank is loaded with hydrogen at a pressure between 0 bar and 1 bar.

17. The method according to any one of the preceding method claims, **characterized in that** the quartz glass blank is loaded with hydrogen at a temperature below 400°C, preferably below 350°C.

18. The method according to any one of the preceding method claims, **characterized in that** the mean hydrogen content of the quartz glass is set below 5 x 10¹⁶ molecules/cm³, preferably in the range between 2 x 10¹⁶ and 5 x 10¹⁶ molecules/cm³.

19. Use of an optical component according to any one of claims 1 to 5 or of an optical component of quartz glass produced according to the method according to claims 6 to 18 in a projection system of an automatic exposure machine for immersion lithography for the purpose of transmitting ultraviolet, pulsed and linearly polarized UV laser radiation of a wavelength between 190 nm and 250 nm.

20. Use according to claim 19, **characterized by** an energy density of the laser radiation of less than 600 µJ/cm², preferably less than 150 µJ/cm².

21. Use according to claim 19 or 20, **characterized by** a pulse width of the laser radiation in time of 50 ns or more, preferably of 150 ns or more.

## Revendications

1. Composant optique en verre de quartz pour l'utilisation dans un objectif de projection pour la lithographie par immersion avec une longueur d'ondes de travail inférieure à 250 nm, **caractérisé en ce que** le verre de quartz présente la combinaison des propriétés suivantes :
• une structure de verre sensiblement exempte de lacunes en oxygène,
• une teneur moyenne en hydrogène comprise entre 1 x 10¹⁶ et 1 x 10¹⁷ molécules/cm³,
• une teneur moyenne en groupes SiH inférieure à 5 x 10¹⁶ molécules/cm³
• une teneur moyenne en groupes hydroxyles inférieure à 60 ppm en poids,
• une teneur moyenne en fluor inférieure à 10 ppm en poids,
• une teneur moyenne en chlore inférieure à 1 ppm en poids et
• une température fictive supérieure à 1040°C.

2. Composant selon la revendication 1, **caractérisé en ce que** le verre de quartz présente une température fictive supérieure à 1080°C.

3. Composant selon la revendication 1 ou 2, **caractérisé en ce que** le verre de quartz présente une teneur en groupes hydroxyles comprise entre 10 et 30 ppm en poids.

4. Composant selon l'une des revendications précédentes, **caractérisé en ce que** le verre de quartz présente une teneur en fluor inférieure à 5 ppm en poids.

5. Composant selon l'une des revendications précédentes, **caractérisé en ce que** la teneur moyenne en hydrogène du verre de quartz est inférieure à 5 x 10¹⁶ molécules/cm³, de préférence entre 2 x 10¹⁶ et 5 x 10¹⁶ molécules/cm³.

6. Procédé pour la fabrication d'un tel composant optique en verre de quartz pour l'utilisation dans un objectif de projection pour la lithographie par immersion avec une longueur d'ondes de travail inférieure à 250 nm, comprenant les étapes de procédé suivantes :
• fabrication d'un corps de suie SiO₂
• séchage du corps de suie à une température d'au moins 1150°C sous vide ou sous gaz inerte et dans des conditions réductrices de sorte qu'une teneur moyenne en groupes hydroxyles inférieure à 60 ppm en poids,
• traitement du corps de suie séché avec un réactif qui réagit avec les lacunes en oxygène de la structure de verre de quartz,
• vitrification du corps de suie en formant une ébauche cylindrique de verre de quartz,
• trempe de l'ébauche de verre de quartz en formant un cylindre en verre de quartz à une température fictive supérieure à 1040°C, de préférence supérieure à 1080°C qui entoure en excédent un contour du composant optique à fabriquer,
• retrait d'une partie de l'excédent axial dans la zone des surfaces frontales du cylindre en verre de quartz, et
• chargement du cylindre en verre de quartz avec de l'hydrogène par chauffage dans une atmosphère contenant de l'hydrogène à une température inférieure à 500°C en générant une teneur moyenne en hydrogène comprise entre 1 x 10¹⁶ molécules/cm³ et 1 x 10¹⁷ molécules/cm³.

7. Procédé selon la revendication 6, **caractérisé en ce que** les réactifs de fluor et/ou d'oxygène sont utilisés pour saturer les lacunes en oxygène générée lors du traitement de déshydratation thermique.

8. Procédé selon la revendication 6 ou 7, **caractérisé en ce que** la quantité de réactif amenée au corps de suie pendant le traitement est adaptée de manière à maintenir une concentration en lacunes d'oxygène inférieure à 2 x 10¹⁶/cm³ dans l'ébauche de verre de quartz.

9. Procédé selon l'une des revendications précédentes de procédé, **caractérisé en ce que** le séchage du corps de suie s'effectue à une température d'au moins 1200° C.

10. Procédé selon l'une des revendications précédentes de procédé, **caractérisé en ce qu'**au cours du séchage, il est obtenu une teneur moyenne en groupes hydroxyles comprise entre 10 et 30 ppm en poids.

11. Procédé selon l'une des revendications précédentes de procédé, **caractérisé en ce que** la trempe de l'ébauche de verre de quartz comprend les étapes suivantes :
• un maintien de l'ébauche en verre de quartz pendant une première durée de 4 heures à une première température supérieure qui est au moins supérieure de 50°C au-dessus de la température fictive du composant en verre de quartz à régler,
• un refroidissement avec une première vitesse réduite de refroidissement à une seconde température plus basse qui se rapproche à +/- 20°C de la température fictive du composant de verre de quartz à atteindre,
• un maintien à la température plus basse de trempe pendant une seconde durée de maintien, et
• un refroidissement à une température finale prédéfinie en dessous de 800°C, de préférence en dessous de 400°C, avec une seconde vitesse de refroidissement plus élevée d'environ 25°C/h.

12. Procédé selon la revendication 11, **caractérisé en ce que** la première vitesse de refroidissement est amenée à une valeur comprise entre 1 °C/h et 10°C/h, de préférence à une valeur comprise entre 3° C/h et 5°C/h.

13. Procédé selon la revendication 11 ou 12, **caractérisé en ce que** la seconde vitesse de refroidissement est amenée à une valeur comprise entre 25°C/h et 80°C/h, de préférence supérieure à 40°C/h.

14. Procédé selon l'une des revendications 11 à 13, **caractérisé en ce que** la seconde durée de maintien est comprise entre 1 heure et 16 heures.

15. Procédé selon l'une des revendications 11 à 14, **caractérisé en ce que** la première durée de maintien est maximal de 50 heures.

16. Procédé selon l'une des revendications précédentes, **caractérisé en ce que** le chargement de l'ébauche en verre de quartz en hydrogène s'effectue à une pression entre 0 bar et 1 bar.

17. Procédé selon l'une des revendications précédentes, **caractérisé en ce que** le chargement de l'ébauche en verre de quartz en hydrogène s'effectue à une température inférieure à 400°C, de préférence à 350°C.

18. Procédé selon l'une des revendications précédentes, **caractérisé en ce que** la teneur moyenne en hydrogène du verre de quartz est amenée à moins de 5 x 10¹⁶ molécules/cm³, de préférence entre 2 x 10¹⁶ et 5 x 10¹⁶ molécules/cm³.

19. Utilisation d'un composant optique en verre de quartz fabriqué selon l'une des revendications 1 à 5, ou l'une des revendications de procédé selon les revendications 6 à 18 dans un système de projection d'une machine automatique d'exposition pour la lithographie d'immersion dans un but de transmission de rayonnement laser ultraviolet, pulsé et linéairement polarisé d'une longueur d'ondes comprise entre 190 nm et 250 nm.

20. Utilisation selon la revendication 19, **caractérisé par** une densité d'énergie du rayonnement laser inférieure à 600 µJ/cm², de préférence inférieure à 150 µJ/cm².

21. Utilisation selon la revendication 19 ou 20, **caractérisée par** une durée d'impulsion du rayonnement laser de 50 ns ou plus, de préférence de 150 ns ou plus.
